# EUROPÄISCHE PATENTSCHRIFT

(11) **EP 2 532 088 B1**
(45) Veröffentlichungstag und Bekanntmachung des Hinweises auf die Patenterteilung: **08.04.2015**
(21) Anmeldenummer: 11701038.9
(22) Anmeldetag: 12.01.2011
(51) Int. Cl.: H02P 29/02, H02P 9/00, H02P 9/10

(54) **SCHALTUNGSANORDNUNG ZUR ÜBERSPANNUNGSBEGRENZUNG EINER ERREGERWICKLUNG EINER SYNCHRONMASCHINE MIT SCHNELLENTREGUNG**
CIRCUIT ASSEMBLY FOR OVERVOLTAGE LIMITING OF AN EXCITATION COIL OF A SYNCHRONOUS MACHINE HAVING FAST DE-EXCITATION
SYSTÈME DE CIRCUIT DESTINÉ À LIMITER LA SURTENSION D'UN ENROULEMENT EXCITATEUR D'UN MOTEUR SYNCHRONE À DÉSEXCITATION RAPIDE

(30) Priorität: 05.02.2010 DE 102010001626
(43) Veröffentlichungstag der Anmeldung: 12.12.2012
(73) Patentinhaber: Robert Bosch GmbH, 70442 Stuttgart (DE)
(72) Erfinder: SPANNHAKE, Stefan, 71706 Markgroeningen (DE); FASSNACHT, Jochen, 75365 Calw (DE); MUELLER, Hans-Peter, 72766 Reutlingen (DE)
(86) Internationale Anmeldenummer: PCT/EP2011/050306
(87) Internationale Veröffentlichungsnummer: WO 2011/095375

(56) Entgegenhaltungen:
- CN-U- 85 201 172
- US-A- 4 118 749
- US-B1- 6 850 043

## Beschreibung

Die Erfindung betrifft eine Schaltungsanordnung zum Entregen einer Erregerwicklung einer Synchronmaschine.

### Stand der Technik

Aus Gründen des Wirkungsgrades und/oder der Herstellungskosten werden als Antriebssystem für Elektrofahrzeuge fremderregte Synchronmaschinen eingesetzt. Derartige elektrische Maschinen weisen eine Erregerwicklung mit sehr hohen Induktivitäten von mehr als 1 Henry auf, in welcher eine Energie von über 100 Joule gespeichert werden kann.

Die Druckschrift US 6,850,043 B1 offenbart ein Überspannungsschutzsystem für eine Schaltung zur variablen Frequenzerzeugung. Die Druckschrift CN 85 201 172 U offenbart eine Schutzschaltung für eine mit Wechselspannung betriebene induktive Speicherdrossel. Die Druckschrift US 4,118,749 A1 offenbart eine Überspannungsschutzschaltung für eine Synchronmaschine mit einem schaltbaren Thyristorschutzzweig.

### Offenbarung der Erfindung

Die vorliegende Erfindung schafft eine Schaltungsanordnung zum Entregen einer Erregerwicklung einer Synchronmaschine im Fehlerfall mit den Merkmalen des Patentanspruchs 1.

Die hohe in der Erregerwicklung gespeicherte Energie führt dazu, dass bei einer abrupten Unterbrechung des Stromkreises zwischen der Steuerschaltung und der Erregerwicklung , an der Unterbrechungsstelle Spannungen von mehreren Kilovolt auftreten können, welche zu einem Lichtbogen führen würden, welcher große Brand- und Verletzungsgefahr birgt. Derartige abrupte Unterbrechungen können sich beispielsweise dadurch ergeben, dass bei laufendem Betrieb ein Steckkontakt zwischen der Steuerschaltung und der Erregerwicklung abgezogen wird oder dass sich die Steckkontakte in Folge von Erschütterungen im laufenden Betrieb selbständig lösen ("losrütteln"). Auch im Crash-Fall kann es zu einer abrupten Unterbrechung einer Verbindungsleitung zwischen der Steuerschaltung und der Erregerwicklung kommen.

Da an die Erregerwicklung neben einer positiven Steuerspannung zur Erregung auch eine negative Steuerspannung zur Schnellentregung anlegbar sein soll, ist es entscheidend, dass die Schutzschaltung derart ausgelegt ist, dass sie im Falle einer Schnellentregung, also bei angelegter negativer Versorgungsspannung an der Erregerwicklung einen Stromfluss über die Schutzschaltung sicher unterbindet. Im Fall einer Unterbrechung einer Verbindungsleitung zwischen der Steuerschaltung und der Erregerwicklung aber einen parallel zur Erregerwicklung liegenden Strompfad öffnet, über welchen die in der Erregerwicklung gespeicherte Energie gezielt abfließen kann.

Da die Steuerschaltung räumlich getrennt von der Erregerwicklung angeordnet ist, ist die Erregerwicklung gemäß einer Ausführungsform der Erfindung über eine Steckverbindung mit mindestens zwei Steckkontakten mit der Steuerschaltung verbindbar und von dieser trennbar. In einem Elektrofahrzeug ist die Steuerschaltung z.B. häufig in einer übergeordneten Leistungselektronikeinheit integriert, wohingegen die Erregerwicklung davon räumlich getrennt auf dem Rotor der Synchronmaschine angeordnet ist.

Beispielsweise weist die Schutzschaltung einen Varistor (spannungsabhängigen Widerstand) oder alternativ eine Suppressordiode oder eine Gasentladungsröhre auf, welcher/welche eine Durchbruchspannung aufweist, welche größer ist als ein maximaler Betrag der negativen Steuerspannung. Ein derartiges, parallel zur Erregerwicklung geschaltetes Bauelement wird im Falle der Schnellentregung unterhalb seiner Durchbruchspannung betrieben und verhindert damit einen Stromfluss. Wird eine Verbindungsleitung zwischen der Steuerschaltung und der Erregerwicklung unterbrochen, steigt die Spannung an der Erregerwicklung solange an, bis die Durchbruchspannung des Bauelementes überschritten wird, dieses leitet und damit einen Stromfluss über das Bauelement zulässt. Die in der Erregerwicklung gespeicherte Energie wird dann in dem Widerstand der Erregerwicklung sowie dem Varistor bzw. der Suppressordiode oder der Gasentladungsröhre "verheizt".

Erfindungsgemäß weist die Schutzschaltung einen Freilaufzweig auf, welcher zumindest eine Reihenschaltung einer Freilaufdiode und eines steuerbaren Schaltelements umfasst, wobei das Schaltelement derart angesteuert wird, dass bei Unterbrechung mindestens einer Verbindungsleitung zwischen der Steuerschaltung und der Erregerwicklung ein Stromfluss über die Freilaufdiode möglich wird. Der bloße Einsatz einer Freilaufdiode verbietet sich, da diese auch im Betriebsfall einer Schnellentregung einen Stromfluss über die Schutzschaltung zulassen würde. Dies kann jedoch durch ein entsprechend gesteuertes Schaltelement, welches beispielsweise als Transistor oder Thyristor ausgeführt sein kann, verhindert werden.

Gemäß einer Ausführungsform der Erfindung kann auch ein zusätzlicher Widerstand in Reihe zur Freilaufdiode geschaltet sein, welcher die Energie im Fehlerfall zum großen Teil "verheizt".

Um die Ansteuerung des Schaltelements schaltungstechnisch möglichst einfach zu gestalten, erfolgt die Ansteuerung z.B. mit Hilfe eines parallel zum Freilaufzweig geschalteten Spannungsteilers, welcher so dimensioniert ist, dass das Schaltelement bei Unterbrechung mindestens einer Verbindungsleitung zwischen der Steuerschaltung und der Erregerwicklung voll leitet.

Dabei weist der Spannungsteiler dazu einen Widerstandszweig auf, der eine Reihenschaltung von zumindest zwei Widerständen umfasst, wobei ein Mittelabgriff zwischen den Widerständen mit einem Steueranschluss des Schaltelementes verbunden ist.

Eine Ausführungsform der Erfindung sieht vor, dass parallel zum Widerstandszweig ein Diodenzweig geschaltet ist, der zumindest eine Reihenschaltung mindestens einer Zenerdiode und mindestens eines Widerstands umfasst, wobei ein Mittelabgriff zwischen der Zenerdiode und dem Widerstand über eine Diode in Sperrrichtung mit dem Mittelanschluss zwischen den Widerständen des Widerstandszweiges verbunden ist. Durch den zusätzlichen Einsatz einer Zenerdiode kann erreicht werden, dass die Schutzschaltung nicht nur im Falle einer Unterbrechung der Zuleitungen zur Erregerspule, sondern auch im Falle einer anderweitig hervorgerufenen Überspannung an der Erregerwicklung sicher als Freilauf arbeitet. Diese Funktionalität kann alternativ auch dadurch erreicht werden, dass ein Varistor parallel zum Widerstandszweig geschaltet wird.

Alle Widerstände innerhalb der Schutzschaltung können dabei als Ohmsche Widerstände oder auch andere Bauelemente mit entsprechendem Ohmschen Anteil ausgebildet sein.

Gemäß einer Ausführungsform der Erfindung ist der Mittelabgriff zwischen den Widerständen des Widerstandszweiges mit einem dritten Steckkontakt der Steckverbindung zwischen der Steuerschaltung und der Erregerwicklung verbunden, wobei der Steckkontakt als vorauseilender Kontakt ausgebildet ist. Somit kann beim Abziehen des Steckers ein möglichst frühzeitiges Durchschalten des Schaltelementes und damit eine möglichst schnelle Entregung der Erregerwicklung gewährleistet werden.

Gemäß einer weiteren Ausführungsform der Erfindung ist die Steckverbindung zwischen der Steuerschaltung und der Erregerwicklung berührsicher ausgeführt, so dass neben der Vermeidung eines Lichtbogens auch eine Verletzungsgefahr durch Berühren der Kontakte nach dem Abziehen des Steckers vermieden wird.

Gemäß einer weiteren Ausführungsform der Erfindung_ist dem Schaltelement ein Komparator vorgeschaltet, welcher die Spannung an der Erregerwicklung mit einem vorgegebenen Schwellwert vergleicht und somit Überspannung detektiert.

Weitere Merkmale und Vorteile von Ausführungsformen der Erfindung ergeben sich aus der nachfolgenden Beschreibung mit Bezug auf die beigefügten Figuren.

### Kurze Beschreibung der Figuren

Es zeigen:
- Figur 1: eine beispielhafte Schaltungsanordnung,
- Figur 2: eine erfindungsgemäße Schaltungsanordnung gemäß einer Ausführungsform,
- Figur 3: eine erfindungsgemäße Schaltungsanordnung gemäß einer weiteren Ausführungsform und
- Figur 4: eine erfindungsgemäße Schaltungsanordnung gemäß einer weiteren Ausführungsform.

### Beschreibung der Ausführungsbeispiele

In den Figuren sind identische oder funktionsgleiche Komponenten jeweils mit dem gleichen Bezugszeichen gekennzeichnet.

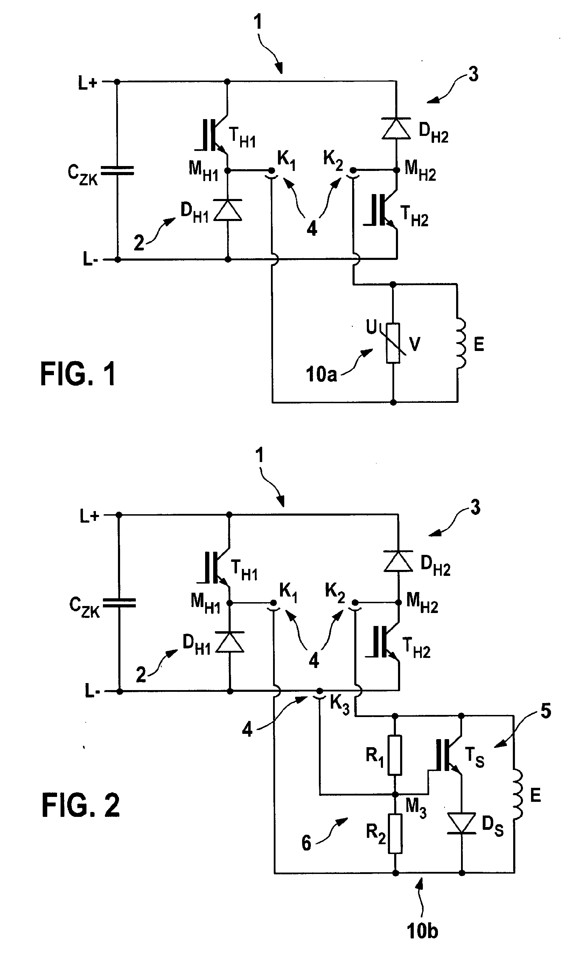

Figur 1 zeigt eine beispielhafte Schaltungsanordnung, bei welcher eine Erregerwicklung E einer ansonsten nicht dargestellten Synchronmaschine über eine Steuerschaltung 1 an eine Spannungsquelle in Form eines Zwischenkreiskondensators C_{ZK} angeschlossen ist. Die Steuerschaltung weist dabei zwei parallele Steuerzweige auf, welche jeweils zwischen eine positive Versorgungsschiene L+ und eine negative Versorgungsschiene L- geschaltet sind. Dabei weist ein erster Steuerzweig 2 eine Reihenschaltung aus einem ersten steuerbaren Steuer-Schaltelelement in Form eines ersten Steuer-Transistors T_{H1} und einer ersten Diode D_{H1} auf, wobei der Kollektor-Anschluss des ersten Steuer-Transistors T_{H1} mit der positiven Versorgungsschiene L+, der Emitter-Anschluss des ersten Steuer-Transistors T_{H1} mit der Kathode der ersten Diode D_{H1} und die Anode der ersten Diode D_{H1} mit der negativen Versorgungsschiene L- elektrisch verbunden ist. Ein zweiter Steuerzweig 3 weist eine Reihenschaltung aus einem zweiten steuerbaren Steuer-Schaltelelement in Form eines zweiten Steuer-Transistors T_{H2} und einer zweiten Diode D_{H2} auf, wobei die Kathode der zweiten Diode D_{H2} mit der positiven Versorgungsschiene L+, die Anode der zweiten Diode D_{H2} mit dem Kollektor-Anschluss des zweiten Steuer-Transistors T_{H2} und der Emitter-Anschluss des zweiten Steuer-Transistors T_{H2} mit der negativen Versorgungsschiene L- elektrisch verbunden ist. Die Gate-Anschlüsse der Steuer-Transistoren T_{H1} und T_{H2} sind jeweils mit einer nicht dargestellten Steuereinheit verbunden, welche durch geeignete Ansteuerung der Steuer-Transistoren T_{H1} und T_{H2} einen Stromfluss durch die Erregerwicklung E steuert.

Zwischen dem Steuertransistor T_{H1}, T_{H2} und der Diode D_{H1}, D_{H2} ist jeweils ein Mittelabgriff M_{H1} bzw. M_{H2} vorgesehen, an welche die Erregerwicklung E angeschlossen ist. Dabei ist zwischen der Steuerschaltung 1 und der Erregerwicklung E eine Steckverbindung 4 vorgesehen, welche im dargestellten Beispiel zwei Steckkontakte K1 und K2 aufweist, über welche die Erregerwicklung E elektrisch mit dem ersten Mittelabgriff M_{H1} bzw. dem zweiten Mittelabgriff M_{H2} verbindbar und auch wieder trennbar ist.

Durch Durchschalten der beiden Steuer-Transistoren T_{H1} und T_{H2} wird eine positive Steuerspannung an die Erregerwicklung E angelegt, so dass der Erregerstrom ansteigt. Durch Sperren eines der beiden Steuer-Transistoren T_{H1} oder T_{H2} bei leitendem anderen Steuer-Transistor wird ein Kurzschluss der Erregerwicklung E über den leitenden Steuer-Transistor und die Diode des jeweils anderen Steuerzweiges erzeugt, welcher einen Freilauf des Stromes in der Erregerwicklung E ermöglicht und zur Beibehaltung eines aktuellen Erregerstromes führt. Werden beide Steuer-Transistoren T_{H1} und T_{H2} gesperrt, so liegt an der Erregerwicklung E eine negative Steuerspannung an, welche zu einer Schnellentregung, also zu einer schnellen Absenkung des Erregerstromes führt.

Die Steuer-Schaltelemente der Steuerschaltung 1 können, wie dargestellt als Bipolar-Transistoren ausgeführt sein, können aber selbstverständlich auch durch andere geeignete Bauelemente, wie z.B. Feldeffekttransistoren, gebildet werden.

Beispielhaft ist parallel zur Erregerwicklung E eine Schutzschaltung 10a in Form eines spannungsabhängigen Widerstands V - häufig auch als Varistor bezeichnet - geschaltet. Der Varistor V ist dabei derart dimensioniert, dass seine Durchbruchspannung - häufig auch als Schwellen- oder Einschaltspannung bezeichnet - über dem maximalen Betrag der negativen Steuerspannung liegt. Vorzugsweise wird ein Varistor eingesetzt, dessen Durchbruchspannung etwa 20 bis 50 Volt über der maximalen Steuerspannung liegt. Auf diese Weise ist gewährleistet, dass der Varistor im Falle einer Schnellentregung, also anliegender negativer Steuerspannung an der Erregerwicklung E, nicht leitet und damit das Anlegen einer negativen Steuerspannung an der Erregerwicklung E überhaupt erst ermöglicht. Wird der Stromkreis zwischen der Steuerschaltung 1 und der Erregerwicklung E unterbrochen, z.B. in Folge des manuellen Öffnens der Steckverbindung 4 oder des selbständigen Öffnens der Steckverbindung 4 in Folge von Erschütterungen und Vibrationen während des Betriebs ("Losrütteln") oder auch in Folge eines Crashs, so steigt die Spannung an der Erregerwicklung solange an, bis die Durchbruchspannung des Varistors V überschritten wird, der Varistor V infolgedessen leitet und damit ein parallel zur Erregerwicklung E verlaufender Strompfad zur Entregung der Erregerwicklung E ausgebildet wird. Die in der Erregerwicklung E gespeicherte Energie wird dann in dem Widerstand der Erregerwicklung E sowie dem Varistor V sozusagen "verheizt".

Zusätzlich kann in Reihe zu dem Varistor V auch mindestens ein nicht dargestellter weiterer Widerstand vorgesehen sein, an welchem im Fehlerfall ebenfalls Energie abgebaut werden kann.

Die Spannung an der Erregerwicklung E wird damit auf einen Wert im Bereich der Durchbruchspannung des Varistors V begrenzt. Werden alle betroffenen Stecker, Leitungen und Gehäuse auf eine entsprechende Spannungsfestigkeit ausgelegt, so kann auf diese Weise ein sicherer Betrieb gewährleistet werden. Vorteilhaft kann außerdem die Steckverbindung 4 berührgeschützt ausgeführt werden.

Fig. 1 wurde beispielhaft für die Parallelschaltung eines Varistors beschrieben. Anstelle des Varistors kann aber auch eine Gasentladungsröhre oder eine Suppressordiode eingesetzt werden.

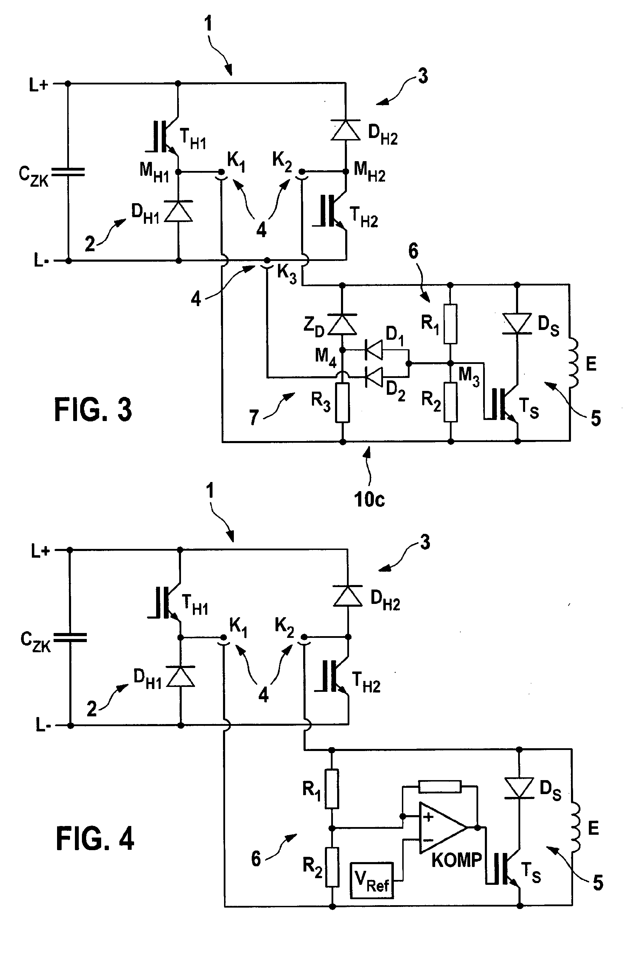

Gemäß einer Ausführungsform einer erfindungsgemäßen Schutzschaltung (Figur 2) ist parallel zur Erregerwicklung E ein Freilaufzweig 5 geschaltet, welcher zumindest eine Reihenschaltung einer Freilaufdiode D_{S} und eines steuerbaren Schaltelements T_{S} umfasst, welches beispielhaft als Schalt-Transistor T_{S} ausgeführt ist. Dabei ist der Kollektoranschluss des Schalt-Transistors T_{S} elektrisch mit dem zweiten Mittelabgriff M_{H2} des zweiten Steuerzweiges 3 der Steuerschaltung 1 verbunden und der Emitteranschluss mit der Anode der Freilaufdiode D_{S}. Die Kathode der Freilaufdiode D_{S} ist elektrisch mit dem ersten Mittelabgriff M_{H1} des ersten Steuerzweiges 2 der Steuerschaltung 1 verbunden. In Reihe zur Freilaufdiode D_{S} kann auch ein zusätzlicher Widerstand vorgesehen sein. Alternativ zu der dargestellten Anordnung kann die Freilaufdiode D_{S} ggf. gemeinsam mit dem zusätzlichen Widerstand auch in den Kollektorzweig des Schalt-Transistors T_{S} geschaltet sein (vgl. auch Figur 3).

Der Schalt-Transistor T_{S} ist derart anzusteuern, dass er bei Unterbrechung mindestens einer Verbindungsleitung zwischen der Steuerschaltung 1 und der Erregerwicklung E durchschaltet und damit ein Stromfluss über die Freilaufdiode D_{S} freigegeben wird. Dies wird dadurch erreicht, dass parallel zum Freilaufzweig 5 ein Spannungsteiler geschaltet wird, welcher im in Figur 2 dargestellten einfachsten Fall aus einem Widerstandszweig 6, umfassend eine Reihenschaltung von mindestens zwei Widerständen R₁ und R₂, besteht. Dabei ist ein Mittelabgriff M₃ zwischen den Widerständen R₁ und R₂ elektrisch einerseits mit der negativen Versorgungsschiene L- und anderseits mit dem Gate-Anschluss des Schalt-Transistors T_{S} verbunden. Die Widerstände R₁ und R₂ sind derart dimensioniert, dass nach Auftrennen der Verbindung zwischen der negativen Versorgungsschiene L- und dem Gate-Anschluss des Schalt-Transistors T_{S} dieser sicher durchschaltet und voll leitet. Bei dieser Ausführungsform bilden der Freilaufzweig 5 und der Widerstandszweig 6 gemeinsam eine Schutzschaltung 10b.

Vorteilhaft wird die elektrische Verbindung zwischen dem Mittelabgriff M3 und der negativen Versorgungsschiene L- mit Hilfe eines dritten Steckkontaktes K3 der Steckverbindung 4 realisiert, wobei der dritte Steckkontakt K3 als vorauseilender Kontakt ausgeführt ist. Auf diese Weise wird erreicht, dass die Verbindung zwischen dem Mittelabgriff M2 und der negativen Versorgungsschiene L- bei Abziehen des Steckers zeitlich vor den Steckkontakten K1 und K2 getrennt wird, dadurch wird der Schalt-Transistor T_{S} frühzeitig durchgeschaltet und eine schnelle Entregung der Erregerwicklung ist gewährleistet.

Figur 3 zeigt eine dritte Ausführungsform einer erfindungsgemäßen Schutzschaltung. Diese unterscheidet sich von der in Figur 2 dargestellten Ausführungsform dadurch, dass parallel zum Widerstandszweig 6 ein Diodenzweig 7 geschaltet ist, der zumindest eine Reihenschaltung mindestens einer Zenerdiode Z_{D} und mindestens eines Widerstands R₃ umfasst, wobei ein Mittelabgriff M₄ zwischen der Zenerdiode Z_{D} und dem Widerstand R₃ über eine erste Diode D₁ in Sperrrichtung elektrisch mit dem Mittelabgriff M3 zwischen den Widerständen R₁ und R₂ des Widerstandszweiges 6 verbunden ist. Die Zenerdiode Z_{D} sowie der Widerstand R₃ werden dabei derart dimensioniert, dass ein Spannungsteiler, welcher aus der Zenerdiode Z_{D}, den Widerständen R₁, R₂ und R₃ sowie der Diode D₁ gebildet wird, bei Anliegen einer Überspannung an der Erregerwicklung E den Schalt-Transistor T_{S} durchschaltet. Bei dieser Ausführungsform bilden der Widerstandszweig 6 und der Diodenzweig 7 zusammen eine Schutzschaltung 10c.

Zusätzlich ist in der Verbindungsleitung zwischen dem Steckkontakt K3 und dem Mittelabgriff M3 des Widerstandszweiges 6 eine zweite Diode D₂ in Sperrrichtung geschaltet. Die Dioden D₁ und D₂ erfüllen gemeinsam die Aufgabe einer ODER-Verknüpfung von Transistorauslösebedingungen. Der Schalt-Transistor T_{S} schaltet somit durch, wenn die Spannung an der Zenerdiode Z_{D} zu groß wird oder wenn die Verbindungsleitung zwischen der Steuerschaltung 1 und der Erregerwicklung E, z.B. durch Trennen der Steckverbindung 4, unterbrochen wird.

Durch die Parallelschaltung des Diodenzweiges 7 kann somit gewährleistet werden, dass die Schutzschaltung generell im Fall einer Überspannung an der Erregerwicklung sicher als Freilauf arbeitet. Dies kann alternativ auch dadurch erreicht werden, dass anstatt des Diodenzweiges 7 ein Varistor parallel zum Widerstandszweig 6 geschaltet wird. Ebenso kann eine Überspannung an der Erregerwicklung auch mit Hilfe eines Komparators detektiert werden. Eine mögliche Schaltungsanordnung mit einem Komparator ist in Figur 4 dargestellt.

Dabei ist anstatt eines Diodenzweiges gemäß Figur 3 ein Komparator KOMP vorgesehen, bei welchem der nicht-invertierende Eingang mit dem Mittelabgriff M3 zwischen den Widerständen R₁ und R₂ des Widerstandszweiges 6 verbunden ist und an den invertierenden Eingang eine Referenzspannung V_{ref} angelegt wird. Der Ausgang des Komparators KOMP ist mit dem Gate-Anschluss des Schalt-Transistors T_{S} verbunden, so dass der Schalt-Transistor T_{S} durchschaltet sobald die Spannung am nicht-invertierenden Eingang des Komparators KOMP größer ist als die Referenzspannung V_{ref}. Durch geeignete Dimensionierung der Widerstände sowie Festlegung der Referenzspannung kann auf diese Weise erreicht werden, dass der Komparator eine Überspannung an der Erregerwicklung E, das heißt ein Überschreiten eines vorgegebenen Schwellwertes, sicher detektiert und den Schalt-Transistor zum Durchschalten veranlasst.

Um neben der Vermeidung eines Lichtbogens auch eine Verletzungsgefahr durch Berühren der Kontakte an der Steckverbindung 4 nach dem Abziehen des Steckers zu vermeiden, ist es vorteilhaft die Steckverbindung 4 berührsicher auszuführen.

## Patentansprüche

1. Schaltungsanordnung zum Entregen einer Erregerwicklung (E) einer Synchronmaschine im Fehlerfall, mit:
- einer Steuerschaltung (1) zum Steuern eines Stromflusses durch die Erregerwicklung (E), wobei zur Erregung eine positive Steuerspannung und zur Schnellentregung eine negative Steuerspannung an die Erregerwicklung (E) anlegbar ist, gekennzeichnet durch
- eine parallel zur Erregerwicklung (E) geschalteten Schutzschaltung (10b; 10c) mit
- einem Freilaufzweig (5), welcher zumindest eine Reihenschaltung einer Freilaufdiode (D_{S}) und eines steuerbaren Schaltelements (T_{S}), welcher als Transistor oder Thyristor ausgebildet ist, umfasst, und
- einem parallel zum Freilaufzweig (5) geschalteten Spannungsteiler, wobei
- der Spannungsteiler einen Widerstandszweig (6) aufweist, welcher eine Reihenschaltung von zumindest zwei Widerständen (R₁, R₂) umfasst,
- ein Mittelabgriff (M₃) zwischen den zwei Widerständen (R₁, R₂) mit einem Steueranschluss des Schaltelementes (T_{S}) verbunden ist, und
- der Spannungsteiler so dimensioniert ist, dass das Schaltelement (T_{S}) bei Unterbrechung mindestens einer Verbindungsleitung zwischen der Steuerschaltung (1) und der Erregerwicklung (E) voll leitet.

2. Schaltungsanordnung nach Anspruch 1, wobei die Erregerwicklung (E) über eine Steckverbindung (4) mit mindestens zwei Steckkontakten (K1, K2) mit der Steuerschaltung (1) verbindbar und von dieser trennbar ist.

3. Schaltungsanordnung nach Anspruch 1, wobei parallel zum Widerstandszweig (6) ein Diodenzweig (7) geschaltet ist, der zumindest eine Reihenschaltung mindestens einer Zenerdiode (Z_{D}) und mindestens eines Widerstands (R₃) umfasst, wobei ein Mittelabgriff (M₄) zwischen der Zenerdiode (Z_{D}) und dem Widerstand (R₃) über eine Diode in Sperrrichtung mit dem Mittelabgriff (M₃) zwischen den zwei Widerständen (R₁, R₂) des Widerstandszweigs (6) verbunden ist.

4. Schaltungsanordnung nach Anspruch 1, wobei parallel zum Widerstandszweig (6) ein Varistor geschaltet ist.

5. Schaltungsanordnung nach einem der Ansprüche 1 bis 4, wobei der Mittelabgriff (M₃) zwischen den zwei Widerständen (R₁, R₂) des Widerstandszweigs (6) mit einem dritten Steckkontakt (K3) der Steckverbindung (4) verbunden ist, welcher als vorauseilender Kontakt ausgebildet ist.

6. Schaltungsanordnung nach Anspruch 1, wobei dem Schaltelement (T_{S}) ein Komparator (KOMP) vorgeschaltet ist, welcher die Spannung an der Erregerwicklung (E) mit einem vorgegebenen Schwellwert vergleicht.

7. Schaltungsanordnung nach Anspruch 2, wobei die Steckverbindung (4) berührsicher ausgeführt ist.

## Claims

1. Circuit arrangement for de-exciting an excitation winding (E) of a synchronous machine in the case of a fault, having:
- a control circuit (1) for controlling a flow of current through the excitation winding (E), wherein a positive control voltage can be applied for excitation and a negative control voltage can be applied for rapid de-excitation of the excitation winding (E), **characterized by**
- a protective circuit (10b; 10c) connected in parallel with the excitation winding (E) having
- a freewheeling branch (5) which comprises at least one series connection composed of a freewheeling diode (D_{S}) and a controllable switching element (T_{S}) which is designed as transistor or thyristor, and
- a voltage divider connected in parallel with the freewheeling branch (5),
wherein
- the voltage divider has a resistor branch (6) which comprises a series connection composed of at least two resistors (R₁, R₂),
- a centre tap (M₃) between the two resistors (R₁, R₂) is connected to a control connection of the switching element (T_{S}), and
- the voltage divider is dimensioned such that the switching element (T_{S}) conducts fully when at least one connection line between the control circuit (1) and the excitation winding (E) is interrupted.

2. Circuit arrangement according to Claim 1, wherein the excitation winding (E) is connectable to and disconnectable from the control circuit (1) via a plug-in connector (4) having at least two plug contacts (K1, K2).

3. Circuit arrangement according to Claim 1, wherein a diode branch (7) is connected in parallel with the resistor branch (6) and comprises at least one series connection composed of at least one Zener diode (Z_{D}) and at least one resistor (R₃), wherein a centre tap (M₄) between the Zener diode (Z_{D}) and the resistor (R₃) is connected to the centre tap (M₃) between the two resistors (R₁, R₂) of the resistor branch (6) via a diode in the reverse-biased direction.

4. Circuit arrangement according to Claim 1, wherein a varistor is connected in parallel to the resistor branch (6).

5. Circuit arrangement according to any of Claims 1 to 4, wherein the centre tap (M₃) between the two resistors (R₁, R₂) of the resistor branch (6) is connected to a third plug contact (K3) of the plug-in connector (4), which is designed as leading contact.

6. Circuit arrangement according to Claim 1, wherein a comparator (KOMP) is connected upstream of the switching element (T_{S}), which comparator compares the voltage across the excitation winding (E) with a predefined threshold value.

7. Circuit arrangement according to Claim 2, wherein the plug-in connector (4) is designed to be safe to touch.

## Revendications

1. Circuit pour désexciter un bobinage d'excitateur (E) d'une machine synchrone en cas de défaut, le circuit présentant :
un circuit de commande (1) qui commande le courant qui s'écoule dans le bobinage d'excitateur (E), une tension de commande positive pouvant être appliquée sur le bobinage d'excitateur (E) pour l'excitation et une tension de commande négative pouvant y être appliquée pour sa désexcitation rapide,
**caractérisé par**
un circuit de protection (10b, 10c) raccordé en parallèle sur le bobinage d'excitateur (E) et présentant :
- une branche (5) à écoulement libre qui comporte au moins un circuit série constitué d'une diode (D_{S}) à écoulement libre et d'un élément asservi de commutation (T_{S}) configuré comme transistor ou thyristor et
- un diviseur de tension raccordé en parallèle sur la branche d'écoulement libre (5),
- le diviseur de tension présentant une branche (6) de résistance qui comporte un raccordement en série d'au moins deux résistances (R₁, R₂),
- un prélèvement central (M3) situé entre les deux résistances (R₁, R₂) et raccordé à une borne de commande de l'élément de commutation (T_{S}) et
- le diviseur de tension est dimensionné de telle sorte que l'élément de commutation (T_{S}) conduise pleinement en cas d'interruption d'au moins un conducteur de liaison entre le circuit de commande (1) et le bobinage d'excitateur (E).

2. Circuit selon la revendication 1, dans lequel le bobinage d'excitateur (E) peut être relié au circuit de commande (1) ou en être séparé par l'intermédiaire d'un raccordement enfichable (4) qui présente au moins deux contacts enfichables (K1, K2).

3. Circuit selon la revendication 1, dans lequel parallèlement à la branche (6) de résistance est raccordée une branche (7) de diode qui comporte au moins un circuit série constitué d'au moins une diode Zener (Z_{D}) et d'au moins une résistance (R₃), un prélèvement central (M₄) étant prévu entre la diode Zener (Z_{D}) et la résistance (R₃) par l'intermédiaire d'une diode en direction de blocage et le prélèvement central (M₃) situé entre les deux résistances (R₁, R₂) de la branche (6) de résistances.

4. Circuit selon la revendication 1, dans lequel un varistor est raccordé en parallèle à la branche (6) de résistance.

5. Circuit selon l'une des revendications 1 à 4, dans lequel le prélèvement central (M3) situé entre les deux résistances (R₁, R₂) de la branche (6) de résistance est raccordé à un troisième contact enfichable (K3) de la liaison enfichable (4), configuré comme contact en avance.

6. Circuit selon la revendication 1, dans lequel un comparateur (KOMP) est raccordé en amont de l'élément de commutation (T_{S}) et compare la tension appliquée sur le bobinage d'excitateur (E) à une valeur de seuil prédéterminée.

7. Circuit selon la revendication 2, dans lequel la liaison enfichable (4) est réalisée de manière à ne pas pouvoir être touchée.
